# EUROPEAN PATENT APPLICATION

(11) **EP 4 580 130 A1**
(43) Date of publication of application: **02.07.2025**
(21) Application number: 23870021.5
(22) Date of filing: 15.08.2023
(51) Int. Cl.: H04L 12/437

(54) **MESSAGE TRANSMISSION METHOD AND APPARATUS**

(30) Priority: 27.09.2022 CN 202211185459
(71) Applicant: Shenzhen Yinwang Intelligent Technologies Co., Ltd., Shenzhen, Guangdong 518129 (CN)
(72) Inventor: FENG, Haike, Shenzhen, Guangdong 518129 (CN)
(74) Representative: MERH-IP Matias Erny Reichl Hoffmann Patentanwälte PartG mbB
(86) International application number: PCT/CN2023/113133
(87) International publication number: WO 2024/066775

(57) **Abstract**

A packet transmission method and apparatus are provided. The method includes: A first endpoint obtains a first packet from a second endpoint, where the first packet includes first indication information indicating that a first link is available, the first link is a link that is between the first endpoint and the second endpoint and that is used to carry the first packet, and the first link belongs to a first routing path between the first endpoint and a destination access device. If determining that a second link is unavailable, the first endpoint generates a second packet, where a payload carried by the second packet is the same as a payload carried by the first packet, the second link is a link between the first endpoint and a next-hop third endpoint on the first routing path, and the second packet includes second indication information indicating that the second link is unavailable. Then, the first endpoint continues to provide a transmission service in a folding switchover manner, and sends the second packet to the second endpoint, so that data in the first packet can be transmitted to the destination access device through another routing path, and therefore, a success rate of packet transmission can be improved.

## Description

### CROSS-REFERENCE TO RELATED APPLICATIONS

This application claims priority to Chinese Patent Application No. 202211185459.4, filed with the China National Intellectual Property Administration on September 27, 2022 and entitled "PACKET TRANSMISSION METHOD AND APPARATUS", which is incorporated herein by reference in its entirety.

### TECHNICAL FIELD

This application relates to the field of virtual network technologies, and in particular, to a packet transmission method and apparatus.

### BACKGROUND

In an in-vehicle network, an in-vehicle gateway needs to support network isolation, and therefore needs to support a virtual local area network (virtual local area network, VLAN)/virtual extensible local area network (virtual extensible local area network, VXLAN) protocol. In addition, because an in-vehicle gateway chip is used in the in-vehicle field, network reliability needs to be improved to a greatest extent.

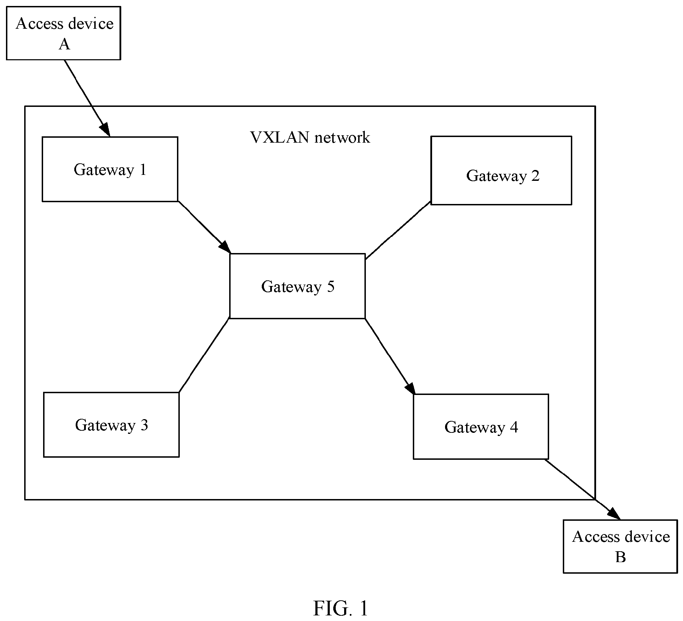

FIG. 1 shows conventional in-vehicle VXLAN networking. An access device A is connected to an access device B through a VXLAN tunnel, and the VXLAN tunnel includes four tunnel endpoints (VXLAN tunnel endpoints, VTEPs): a gateway 1, a gateway 2, a gateway 3, and a gateway 4. A transmission process of a packet sent by the access device A to the access device B is as follows: The packet sent by the access device A enters the VXLAN tunnel through the gateway 1, is forwarded to the gateway 4 through a gateway 5 in the VXLAN tunnel, then exits the VXLAN tunnel through the gateway 4, and is forwarded to the access device B. In the foregoing transmission process of the packet, a forwarding path of the packet is a unique path including the gateway 1, the gateway 5, and the gateway 4. On this forwarding path, if a connection between any two gateways is disconnected or a port of any gateway is faulty, the packet cannot be successfully forwarded to the access device B.

### SUMMARY

Embodiments of this application provide a packet transmission method and apparatus, to improve a success rate of packet transmission.

According to a first aspect, this application provides a packet transmission method. The method includes: A first endpoint obtains a first packet from a second endpoint, where the first packet includes first indication information, the first indication information indicates that a first link is available, the first link is a link that is between the first endpoint and the second endpoint and that is used to carry the first packet, and the first link belongs to a first routing path between the first endpoint and a destination access device. If determining that a second link is unavailable, the first endpoint generates a second packet, where a payload carried by the second packet is the same as a payload carried by the first packet, the second link is a link between the first endpoint and a third endpoint on the first routing path, the second packet includes second indication information, the second indication information indicates that the second link is unavailable, and the third endpoint is a next-hop node of the first endpoint on the first routing path. Then, the first endpoint sends the second packet to the second endpoint.

According to the method, after the first endpoint obtains the first packet of the second endpoint, if the second link between the first endpoint and the third endpoint is unavailable, the payload carried by the first packet cannot continue to be transmitted to the destination access device through the first routing path, and the first endpoint generates the second packet, and sends the second packet to the second endpoint, so that a transmission service can continue to be provided in a folding switchover manner. After receiving the second packet, the second endpoint may determine, based on the second indication information, that the second link is unavailable, so that data in the first packet can be transmitted to the destination access device through another routing path, and a success rate of packet transmission can be improved.

In a possible design, the method further includes: If determining that the second link is available, the first endpoint generates a third packet, where the third packet includes third indication information, and the third indication information indicates that the second link is available. Then, the first endpoint sends the third packet to the third endpoint. In this case, when the second link is available, the first endpoint may continue to transmit the packet to the destination access device through the first routing path.

In a possible design, that the first endpoint determines that the second link is unavailable may include: The first endpoint does not receive a link detection packet from the third endpoint within preset duration; or the first endpoint receives fault information indicating that the second link is faulty. In this case, the first endpoint may determine, based on whether the link detection packet is received within the preset duration or whether the fault information indicating that the second link is faulty is received, whether the second link is available.

In a possible design, the first indication information is carried in a low-latency reliable Ethernet LLRE field in the first packet, and the second indication information is carried in an LLRE field in the second packet. In this embodiment of this application, whether a link between a current endpoint and a previous-hop node is available is determined based on specific information carried in an LLRE field in a packet transmitted between endpoints.

In a possible design, the LLRE field further includes fourth indication information, and the fourth indication information indicates that a packet does not pass through a source endpoint connected to a source access device; or the LLRE field further includes fifth indication information, and the fifth indication information indicates that a packet has passed through the source endpoint. Whether the packet has passed through the source endpoint may be learned based on the fourth indication information or the fifth indication information carried in the LLRE field. For example, based on the fourth indication information carried in the LLRE field in combination with the first indication information carried in the LLRE field, it may be learned that folding switchover occurs on the packet but the packet has not returned to the source endpoint. Based on the fourth indication information and the first indication information carried in the LLRE field, it may be learned that folding switchover occurs on the packet and the packet has returned to the source endpoint.

In a possible design, the LLRE field further includes a packet life cycle, and the packet life cycle indicates a quantity of endpoints that the packet does not pass through on a routing path on which the packet is located, or indicates a quantity of endpoints that the packet has passed through on a routing path on which the packet is located. In this case, whether the packet arrives at a destination endpoint may be determined based on the packet life cycle.

In a possible design, the LLRE field further includes a ring network packet identifier indicating whether the packet is a ring network packet.

In a possible design, the LLRE field further includes a ring network identifier indicating an identifier of a ring network to which the packet belongs.

In a possible design, a length of the LLRE field is 6 bytes.

In a possible design, the second endpoint is the source endpoint, and the method further includes: The source endpoint receives an original packet from the source access device. The source endpoint sends the first packet to the first endpoint, where the first packet is obtained by adding a packet header to the original packet, and the first routing path is a routing path between the source access device and the destination access device. For example, the packet header includes the LLRE field. In this case, when the original packet of the source access device is transmitted between the endpoints, packet forwarding in the ring network may be controlled by using the LLRE field, so that packet transmission continues on the another path when folding switchover occurs, to improve the success rate of packet transmission.

In a possible design, the third endpoint is the destination endpoint, and the method further includes: The destination endpoint receives the third packet, where the third packet includes packet information and an LLRE field. The destination endpoint provides the packet information in the third packet for the destination access device, where the packet information does not include the LLRE field of the third packet. According to this design, after receiving the third packet, the destination endpoint removes the LLRE field in the third packet, to transmit the packet information to the destination access device.

In a possible design, either of the first packet and the second packet is of any one of the following types: a unicast packet, a multicast packet, and a broadcast packet.

In a possible design, a frame format of either of the first packet and the second packet conforms to an 802.1CB format. According to this design, a device that receives a packet carrying an LLRE tunnel header can parse the packet based on the 802.1CB format. Even if a device to which the packet transmission method provided in this application is not applicable receives the packet carrying the LLRE tunnel header, a problem that the packet cannot be identified does not occur.

According to a second aspect, this application provides a packet transmission method. The method includes: A second endpoint sends a first packet to a first endpoint, where the first packet includes first indication information, the first indication information indicates that a first link is available, the first link is a link that is between the first endpoint and the second endpoint and that is used to carry the first packet, and the first link belongs to a first routing path between the first endpoint and a destination access device. The second endpoint receives a second packet from the first endpoint, where the second packet includes second indication information, the second indication information indicates that a second link is unavailable, the second link is a link between the first endpoint and a next-hop third endpoint on the first routing path, and a payload carried by the second packet is the same as a payload carried by the first packet.

According to the method, after the second endpoint sends the first packet to the first endpoint, because the second link is unavailable, the payload carried by the first packet cannot continue to be transmitted to the destination access device through the first routing path, and the first endpoint generates the second packet and continues to provide a transmission service in a folding switchover manner, so that the second endpoint can be transmitted to the destination access device through another routing path, and therefore, a success rate of packet transmission can be improved. In this way, data in the first packet can be transmitted to the destination access device through the another routing path, and therefore, the success rate of packet transmission can be improved.

In a possible design, if determining that a third link is available, the second endpoint generates a fourth packet and sends the fourth packet to a fourth endpoint. A payload carried by the fourth packet is the same as the payload carried by the second packet. The fourth packet includes sixth indication information, and the sixth indication information indicates that the third link is available. The third link is a link that is between the second endpoint and the fourth endpoint and that is used to carry the fourth packet. The third link belongs to a second routing path between the first endpoint and the destination access device. The fourth endpoint is a next-hop node of the second endpoint on the second routing path. In this case, after receiving the second packet, the second endpoint learns that the second link is unavailable and folding switchover has occurred, and then switches to continue transmission to the next-hop node through the third link on the second routing path. Therefore, the success rate of packet transmission can be improved.

In a possible design, that the second endpoint determines that the third link is available includes: The second endpoint receives a link detection packet from the fourth endpoint within preset duration; or the second endpoint does not receive fault information indicating that the third link is faulty. In this case, the second endpoint may determine, based on whether the link detection packet is received within the preset duration or whether the fault information indicating that the third link is faulty is received, whether the third link is available.

In a possible design, the first indication information is carried in a low-latency reliable Ethernet LLRE field in the first packet, the second indication information is carried in an LLRE field in the second packet, and the sixth indication information is carried in an LLRE field in the fourth packet. In this embodiment of this application, whether a link between a current endpoint and a previous-hop node is available is determined based on specific information carried in an LLRE field in a packet transmitted between endpoints.

In a possible design, the LLRE field further includes fourth indication information, and the fourth indication information indicates that a packet does not pass through a source endpoint connected to a source access device; or the LLRE field further includes fifth indication information, and the fifth indication information indicates that a packet has passed through the source endpoint. Whether the packet has passed through the source endpoint may be learned based on the fourth indication information or the fifth indication information carried in the LLRE field. For example, based on the fourth indication information carried in the LLRE field in combination with the first indication information carried in the LLRE field, it may be learned that folding switchover occurs on the packet but the packet has not returned to the source endpoint. Based on the fourth indication information and the first indication information carried in the LLRE field, it may be learned that folding switchover occurs on the packet and the packet has returned to the source endpoint.

In a possible design, the LLRE field further includes a packet life cycle, and the packet life cycle indicates a quantity of endpoints that the packet does not pass through on a routing path on which the packet is located, or indicates a quantity of endpoints that the packet has passed through on a routing path on which the packet is located. In this case, whether the packet arrives at a destination endpoint may be determined based on the packet life cycle.

In a possible design, the LLRE field further includes a ring network packet identifier indicating whether the packet is a ring network packet.

In a possible design, the LLRE field further includes a ring network identifier indicating an identifier of a ring network to which the packet belongs.

In a possible design, a length of the LLRE field is 6 bytes.

In a possible design, the second endpoint is the source endpoint. Before that a second endpoint sends a first packet to a first endpoint, the method further includes: The second endpoint receives an original packet from the source access device. The second endpoint generates the first packet, where the first packet is obtained by adding a packet header to the original packet. For example, the packet header includes the LLRE field. In this case, when the original packet of the source access device is transmitted between the endpoints, packet forwarding in the ring network may be controlled by using the LLRE field, so that packet transmission continues on the another path when folding switchover occurs, to improve the success rate of packet transmission.

In a possible design, the third endpoint is the destination endpoint, and the method further includes: The destination endpoint receives the third packet, where the third packet includes packet information and an LLRE field. The destination endpoint provides the packet information in the third packet for the destination access device, where the packet information does not include the LLRE field of the third packet. According to this design, after receiving the third packet, the destination endpoint removes the LLRE field in the third packet, and transmits, to the destination access device, the packet information that does not include the LLRE field.

In a possible design, any one of the first packet, the second packet, or the fourth packet is of any one of the following types: a unicast packet, a multicast packet, and a broadcast packet.

In a possible design, a frame format of any one of the first packet, the second packet, or the fourth packet conforms to an 802.1CB format. According to this design, a problem that a peer vendor device cannot identify a packet carrying an LLRE tunnel header when receiving the packet carrying the LLRE tunnel header can be prevented.

According to a third aspect, a packet transmission apparatus is provided, including different ports and a processing module. Each port includes a corresponding sending module and a corresponding receiving module. The processing module cooperates with the sending modules and the receiving modules on the different ports to perform any implementation of either packet transmission method according to the first aspect and the second aspect. The sending module and the receiving module are configured to perform functions related to sending and receiving.

In another design, the sending module may be a transmitter or a transmitter machine, and the receiving module may be a receiver or a receiver machine.

Optionally, the packet transmission apparatus further includes modules that may be configured to perform any implementation of either packet transmission method according to the first aspect and the second aspect.

According to a fourth aspect, a packet transmission apparatus is provided. The packet transmission apparatus may be a network device, for example, may be the foregoing first endpoint or second endpoint, and includes a processor and a memory. Optionally, the packet transmission apparatus further includes a receiver and a transmitter. The memory is configured to store a computer program or instructions. The processor is configured to invoke the computer program or the instructions from the memory and run the computer program or the instructions. When the processor executes the computer program or the instructions in the memory, the packet transmission apparatus is enabled to perform any implementation of either packet transmission method according to the first aspect and the second aspect.

Optionally, there may be one or more processors, and one or more memories. Optionally, the memory may be integrated with the processor, or the memory and the processor are disposed separately.

Optionally, the receiver may be a receiver machine, and the transmitter may be a transmitter machine.

According to a fifth aspect, a packet transmission apparatus is provided, including a processor. The processor is coupled to a memory, and may be configured to perform the method according to either of the first aspect and the second aspect and any possible implementation of the first aspect and the second aspect. Optionally, the packet transmission apparatus may further include the memory. Optionally, the packet transmission apparatus may further include a sending interface and a receiving interface, and the processor is coupled to the sending interface and the receiving interface.

In an implementation, the packet transmission apparatus may be a network device. When the packet transmission apparatus is a network device, the sending interface may be a transmitter or an output interface, and the receiving interface may be a receiver or an input interface. Optionally, the receiver may be a receiver circuit, and the transmitter may be a transmitter circuit. Optionally, the input/output interface may be an input/output circuit.

In another implementation, the packet transmission apparatus may be a chip or a chip system. When the packet transmission apparatus is a chip or a chip system, the receiving/sending interface may be an input/output interface, an interface circuit, an input/output circuit, a pin, a related circuit, or the like on the chip or the chip system. The processor may alternatively be embodied as a processing circuit or a logic circuit.

According to a sixth aspect, this application further provides a vehicle. The vehicle includes an apparatus configured to perform the method according to the first aspect or any implementation of the first aspect, and includes an apparatus configured to perform the method according to the second aspect or any possible implementation of the second aspect.

According to a seventh aspect, this application further provides a computer-readable storage medium. The computer-readable storage medium stores a computer program. When the computer program is run, operation steps of the method according to any implementation of the first aspect and the second aspect are implemented.

According to an eighth aspect, this application further provides a computer program product. The computer program product includes a computer program or instructions. When the computer program or the instructions are executed by a packet transmission apparatus, operation steps of the method according to any implementation of the first aspect and the second aspect are implemented.

For beneficial effects of any possible implementation of any one of the third aspect to the eighth aspect, refer to beneficial effects of related content in the first aspect and the second aspect. Details are not described herein again.

### BRIEF DESCRIPTION OF DRAWINGS

FIG. 1 is a diagram of conventional in-vehicle VXLAN networking;
FIG. 2 is a diagram of a network architecture to which an embodiment of this application is applicable;
FIG. 3 is a diagram of packet transmission according to an embodiment of this application;
FIG. 4 is a schematic flowchart of a packet transmission method according to an embodiment of this application;
FIG. 5 is a diagram of a packet header according to an embodiment of this application;
FIG. 6 is a schematic flowchart of a packet transmission method according to an embodiment of this application;
FIG. 7 is a diagram of a VXLAN tunnel header according to an embodiment of this application;
FIG. 8 is a diagram of another network architecture to which an embodiment of this application is applicable;
FIG. 9 is a diagram of a packet transmission apparatus according to an embodiment of this application; and
FIG. 10 is a diagram of a packet transmission apparatus according to an embodiment of this application.

### DESCRIPTION OF EMBODIMENTS

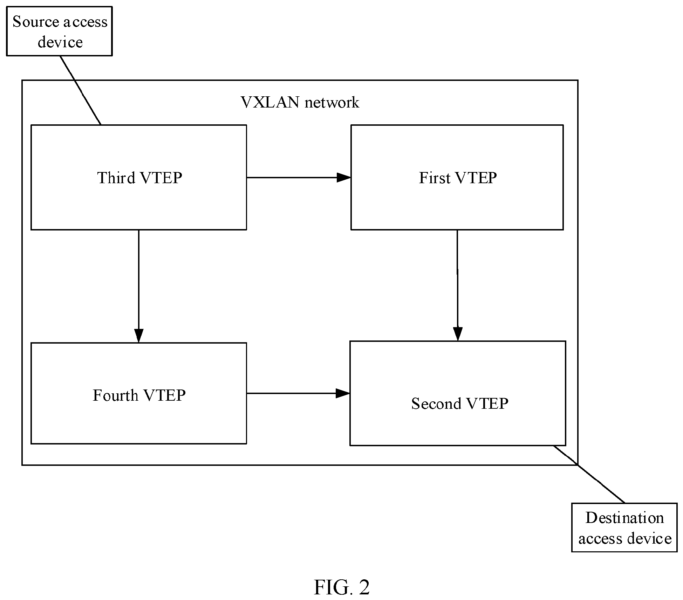

FIG. 2 is an example of a diagram of a network architecture to which an embodiment of this application is applicable. As shown in FIG. 2, the network architecture includes a source access device, a destination access device, and a VXLAN network. The VXLAN network includes four endpoints, for example, a first VTEP, a second VTEP, and a third VTEP. The VTEPs are connected to form a ring VXLAN network. As shown in FIG. 2, the first VTEP, the second VTEP, the fourth VTEP, and the third VTEP are sequentially connected to form a ring network, and packets may be transmitted in both a clockwise direction and a counterclockwise direction. The source access device and the destination access device may interact with each other through the VTEPs. FIG. 2 is merely a diagram, and does not limit a type of the network architecture, a quantity of devices included in the network architecture, a device type, and the like. For example, FIG. 2 may further include another type of device, or may include more source access devices and destination access devices, or may include more or fewer VTEPs.

The first VTEP, the second VTEP, the third VTEP, and the fourth VTEP may be gateway devices. The gateway device may be connected to the access device through an Ethernet interface (for example, at 1 Gbps, 10 Gbps, or 25 Gbps). It should be noted that, for different application scenarios, the VTEPs in the network architecture in FIG. 2 may be different devices. For example, in an in-vehicle network scenario, the source access device in FIG. 2 may be a sensor of various types or an electronic control unit (electronic control unit, ECU) that uses a CAN bus signal. The sensor may be, for example, a camera sensor, a radar sensor, a lidar sensor, a millimeter-wave radar sensor, or an ultrasonic sensor. The VTEP in a VXLAN tunnel may be a gateway. The destination access device may be a gateway, a processor, a mobile data center (mobile data center, MDC), an ECU, or another device that may process a data flow.

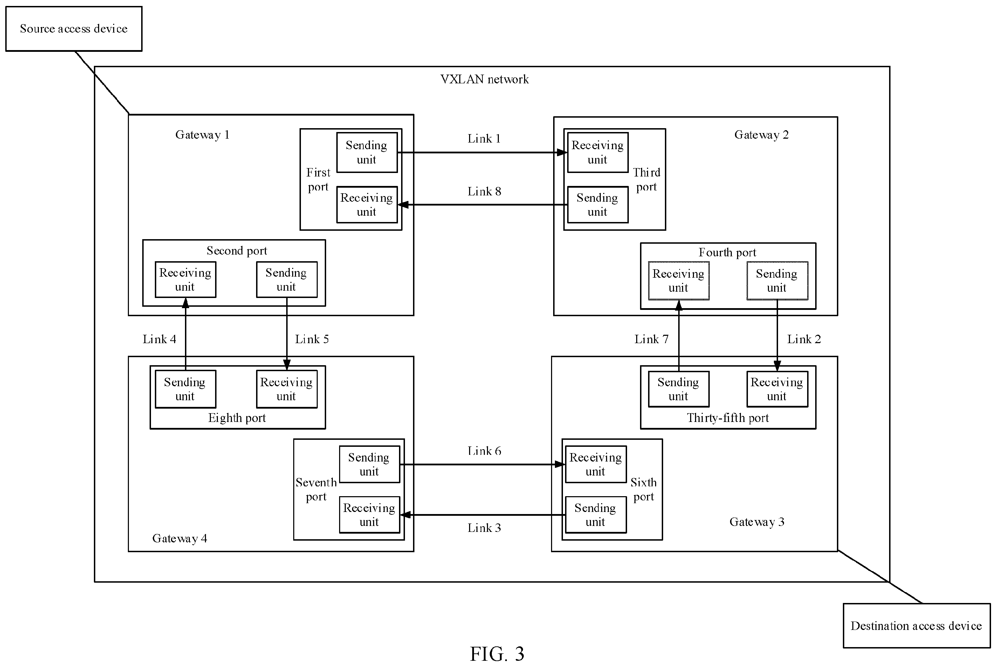

Based on the system architecture shown in FIG. 2 and using an example in which all the four endpoints are gateways, FIG. 3 is an example of a diagram of packet transmission according to an embodiment of this application.

When none of links between the gateways in the ring network is faulty, a packet sent by the source access device may be transmitted in the clockwise direction in the ring network and finally arrive at the destination access device, or may be transmitted in the counterclockwise direction and finally arrive at the destination access device. For example, after receiving a packet A from the source access device, a gateway 3 in the ring network transmits the packet A in the clockwise direction. As shown in FIG. 3, after receiving the packet A, the gateway 3 transmits the packet A to a gateway 1, then the gateway 1 transmits the packet A to a gateway 2, and the gateway 2 transmits the packet A to the destination access device. It should be noted that the four gateways shown in FIG. 2 and FIG. 3 are merely examples, and a quantity of gateways is not limited in embodiments of this application.

As shown in FIG. 3, each gateway in the gateway 1, the gateway 2, a gateway 4, and the gateway 3 may include one or more ports. For example, each gateway includes n ports, and n is an integer greater than 2. Each gateway may include two ring network ports, which are respectively connected to ring network ports of two neighboring gateways. A first port, a second port, a third port, a fourth port, a fifth port, a sixth port, a seventh port, and an eighth port shown in FIG. 3 form a ring network. As shown in FIG. 3, the gateway 1 includes the first port and the second port, the gateway 2 includes the third port and the fourth port, the gateway 3 includes the fifth port and the sixth port, and the gateway 4 includes the seventh port and the eighth port. Each port of each gateway shown in FIG. 3 includes a sending unit and a receiving unit. The first port of the gateway 1 is used as an example for description. Others are similar and details are not described again. As shown in FIG. 3, a sending unit of the first port is connected to a receiving unit of the third port of the gateway 2, and a receiving unit of the first port is correspondingly connected to a sending unit of the third port of the gateway 2. When the gateway 1 sends a message through the first port, the message is sent to the receiving unit of the third port of the gateway 2 by using the sending unit of the first port. When the gateway 2 sends the message through the third port, the message is sent to the receiving unit of the first port of the gateway 1 by using the sending unit of the third port of the gateway 2. In this embodiment of this application, a link corresponding to a receiving unit of a port is the same as a link corresponding to a sending unit of a peer port of the port, and a link corresponding to a sending unit of a port is the same as a link corresponding to a receiving unit of a peer port of the port. For example, in FIG. 3, a link corresponding to the receiving unit of the first port of the gateway 1 is the same as a link corresponding to the sending unit of the third port of the gateway 2, and a link corresponding to the sending unit of the first port of the gateway 1 is the same as a link corresponding to the receiving unit of the third port of the gateway 2.

In addition, in addition to the ring network ports, each gateway may further include at least one another port (not shown in FIG. 3), and each of the another port may be connected to one access device.

In this embodiment of this application, a link between two ports may be referred to as a bidirectional link. The bidirectional link includes two unidirectional links. For example, a bidirectional link between the first port and the second port includes: a link in a first direction, which is a unidirectional link transmitting from the first port to the second port and is, for example, a link 1 in FIG. 3; and a link in a second direction, which is a unidirectional link transmitting from the second port to the first port and is, for example, a link 8 in FIG. 3. As shown in FIG. 3, a bidirectional link between two ports may actually be two physical cables, or may be one physical cable.

It should be noted that, that a port of a device is faulty may be that a link corresponding to a receiving unit or a sending unit of the port is faulty, or may be referred to as that the port is in a faulty state.

That a port is in a non-faulty state means that a link corresponding to a sending unit of the port is in the non-faulty state, and a link corresponding to a receiving unit of the port is in the non-faulty state.

In embodiments of this application, "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

In addition, unless otherwise specified, ordinal numbers such as "first" and "second" in embodiments of this application are used to distinguish between a plurality of objects, and are not used to limit a sequence, a time sequence, priorities, or importance of the plurality of objects. For example, the first VTEP, the second VTEP, the third VTEP, and the fourth VTEP are merely used to distinguish between different VTEPs, but do not indicate different priorities, importance degrees, or the like of the VTEPs.

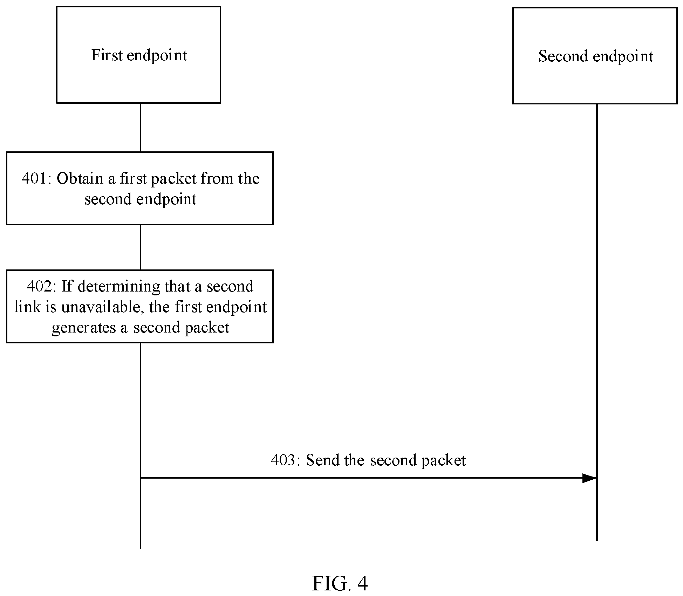

Based on the foregoing content, FIG. 4 is a schematic flowchart of a packet transmission method according to an embodiment of this application. As shown in FIG. 4, the method includes the following steps.

Step 401: A first endpoint obtains a first packet from a second endpoint.

The first packet includes at least one piece of first information, and the at least one piece of first information may indicate that a first link is available. The first link is a link that is between the first endpoint and the second endpoint and that is used to carry the first packet. The first link belongs to a first routing path between the first endpoint and a destination access device.

The at least one piece of first information may be carried in a low-latency reliable Ethernet (low-latency reliable Ethernet, LLRE) field in the first packet. It should be understood that a name of the LLRE field is not limited in embodiments of this application, and details are not described below.

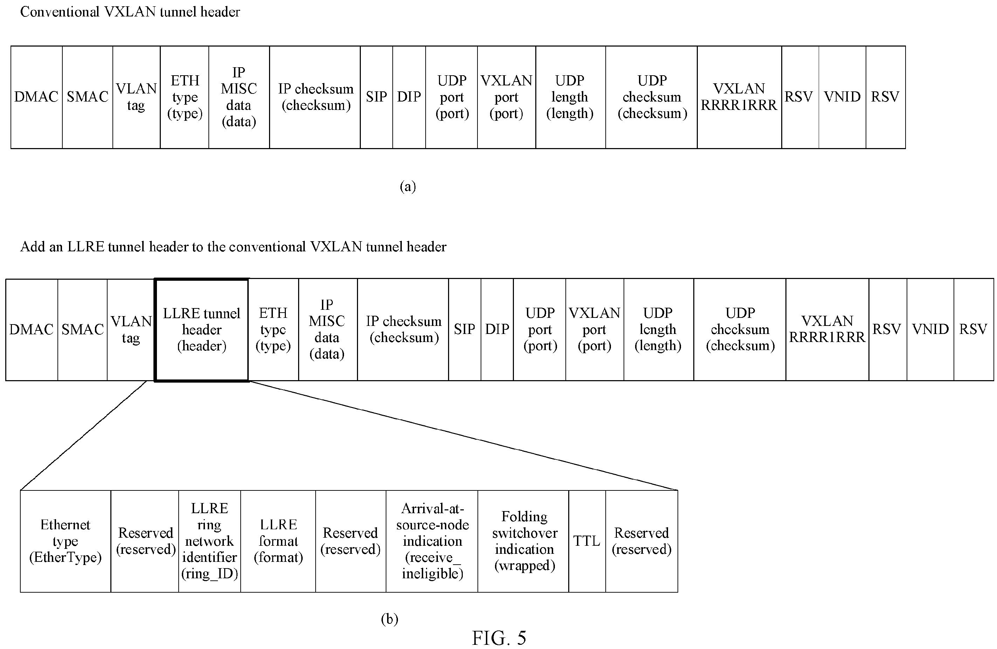

The at least one piece of first information may include but is not limited to the following content: information carried in fields such as a ring network identifier (ring_ID) field, an LLRE format (LLRE_format) field, a folding switchover indication (wrapped) field, an arrival-at-source-node indication (receive_ineligible) field, and an LLRE life cycle (TTL) field that are included in an LLRE header shown in (b) in FIG. 5.

The ring network identifier field may carry a ring network identifier indicating an identifier of a ring network to which a packet belongs. For example, in a dual-ring cross-networking scenario or a cross-networking scenario of more than two ring networks, the first endpoint receives the first packet carrying a ring network identifier, where the ring network identifier is used by the first endpoint to distinguish a ring network from which the first packet comes.

The LLRE format field may carry a ring network packet identifier indicating whether a packet is a ring network packet. For example, a ring network packet identifier in the first packet is 1, indicating that the first packet is a ring network packet. For another example, a ring network packet identifier in the first packet is 0, indicating that the first packet is not a ring network packet.

The folding switchover indication field may carry folding switchover indication information. For example, when the folding switchover indication information is set to a first value (for example, 1), it indicates that an egress port of the first endpoint is faulty, and folding switchover occurs.

The arrival-at-source-node indication field may carry indication information indicating whether a packet arrives at a source node. For example, when the arrival-at-source-node indication field is set to 1, it indicates that the packet does not pass through the source node connected to a source access device. For another example, when the arrival-at-source-node indication field is set to 0, it indicates that the packet has passed through the source node connected to a source access device. For example, refer to FIG. 3. The source endpoint is the gateway 1 connected to the source access device.

For a unicast packet, when a folding switchover indication (wrapped) field in the packet is 1 and an arrival-at-source-node indication (receive_ineligible) field is 1, it indicates that the packet after folding switchover has not arrived at the source node. A multicast/broadcast packet is processed as unicast after folding switchover and before arriving at the source node.

The LLRE life cycle field may carry a packet life cycle indicating a quantity of endpoints that a packet does not pass through on a routing path on which the packet is located, or indicating a quantity of endpoints that a packet has passed through on a routing path on which the packet is located. For example, to ensure that the packet can be transmitted in the ring network for one circle, when the packet enters the ring network and folding switchover occurs, the packet life cycle is reset to a quantity of ring network nodes, and at other times, the packet life cycle is decreased by 1 each time the packet passes through an endpoint (for example, a gateway).

The fields described above are mandatory fields for forwarding in the ring network, and an arrangement sequence and locations of the fields in a tunnel header are not limited. For example, currently, a 6-byte header of the entire LLRE field may be placed in a layer 2 header and located after a VLAN tag, or may be moved to any location in a tunnel header such as a layer 3 header, a layer 4 header, or a VXLAN feature field.

Optionally, the LLRE tunnel header may further include a reserved (reserved) field, and locations of the LLRE field and the reserved field may alternatively be interchanged.

Step 402: If determining that a second link is unavailable, the first endpoint generates a second packet.

The second link is a link between the first endpoint and a third endpoint on the first routing path, and the third endpoint is a next-hop node of the first endpoint on the first routing path.

A payload carried by the second packet is the same as a payload carried by the first packet. The second packet includes at least one piece of second information, and the at least one piece of second information may be carried in the low-latency reliable Ethernet (low-latency reliable Ethernet, LLRE) field in the first packet. The at least one piece of second information may include but is not limited to the following content: information carried in fields such as a ring network identifier (ring_ID) field, an LLRE format (LLRE_format) field, a folding switchover indication (wrapped) field, an arrival-at-source-node indication (receive_ineligible) field, and an LLRE life cycle (TTL) field.

If the first packet includes the ring network identifier (ring_ID) field, the LLRE format (LLRE_format) field, the folding switchover indication (wrapped) field, the arrival-at-source-node indication (receive_ineligible) field, and the LLRE life cycle (TTL) field, the second packet also includes these fields. A difference lies in that information carried in at least one of these fields carried in the first packet and the second packet is different. For example, the folding switchover indication information carried in the first packet is 0, and folding switchover indication information carried in the second packet is 1. In this case, the at least one piece of second information may indicate that the second link is unavailable.

Step 403: The first endpoint sends the second packet to the second endpoint.

In this embodiment of this application, after receiving the second packet, the first endpoint determines, based on the at least one piece of second information carried in the second packet, that the second link is unavailable. In other words, the first endpoint cannot transmit, to the destination access device through the first routing path, data carried in the second packet. In this case, the first endpoint may transmit, to the destination access device through another routing path (for example, a second routing path), the data carried in the second packet, to improve a success rate of packet transmission.

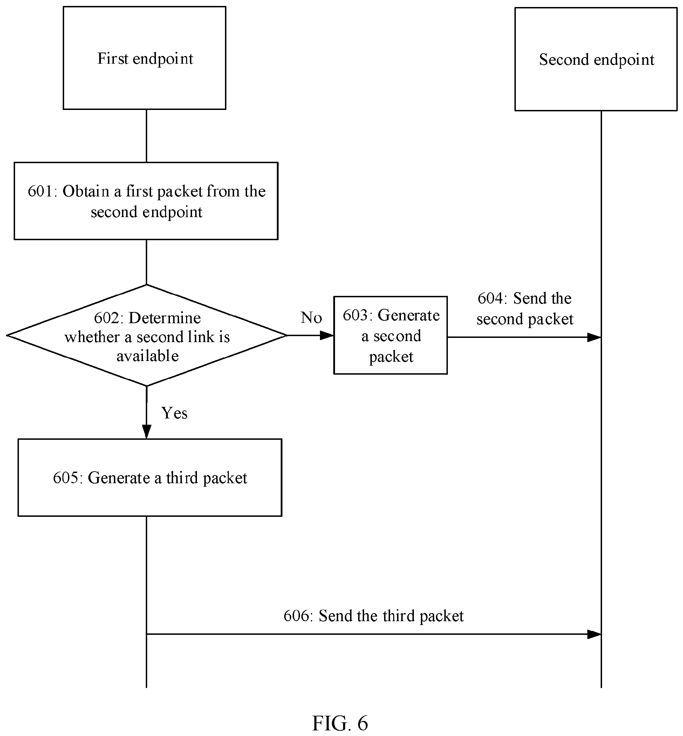

Based on the packet transmission method in the foregoing embodiment, that the packet carries the folding switchover indication information is used as an example. The folding switchover indication information may indicate whether a link between two endpoints is available. FIG. 6 is a schematic flowchart of a packet transmission method according to an embodiment of this application. As shown in FIG. 6, the method includes the following steps.

Step 601: A first endpoint obtains a first packet from a second endpoint.

The first packet includes first indication information, and the first indication information indicates that a first link is available. The first link is a link that is between the first endpoint and the second endpoint and that is used to carry the first packet. The first link belongs to a first routing path between the first endpoint and a destination access device. For example, the first indication information is 0.

The first indication information may be carried in a low-latency reliable Ethernet LLRE field in the first packet.

Step 602: The first endpoint determines whether a second link is available. If the second link is available, step 605 is performed. If the second link is unavailable, step 603 is performed.

The second link is a link between the first endpoint and a third endpoint on the first routing path, and the third endpoint is a next-hop node of the first endpoint on the first routing path.

In a possible implementation, that the first endpoint determines that the second link is unavailable may be implemented in any one of the following manners:
Manner a1: The first endpoint does not receive a link detection packet from the third endpoint within preset duration.
Manner a2: The first endpoint receives fault information indicating that the second link is faulty.

It is determined that the second link is unavailable, or in other words, it is determined that the second link is in a faulty state. Then, proceed to perform step 603.

In a possible implementation, that the first endpoint determines that the second link is available may be implemented in any one of the following manners:
Manner b1: The first endpoint receives a link detection packet from the third endpoint within preset duration.
Manner b2: The first endpoint does not receive fault information indicating that the second link is faulty.

It is determined that the second link is available, or in other words, it is determined that the second link is in a non-faulty state. Then, proceed to perform step 605.

It should be noted that, in one case, if step 603 is performed after step 602, after step 603 and step 604 are performed, a procedure ends, and step 605 and step 606 are not performed. In another case, if step 605 is performed after step 602, step 603 and step 604 are not performed, and step 606 is performed after step 605 is performed.

Step 603: The first endpoint generates a second packet. Then, proceed to perform step 604.

A payload carried by the second packet is the same as a payload carried by the first packet. The second packet includes second indication information, and the second indication information indicates that the second link is unavailable.

For example, the first endpoint may convert the first packet into the second packet. An LLRE field in the second packet carries the second indication information, and the second indication information indicates that the second link is unavailable. For example, the second indication information is 1.

Step 604: The first endpoint sends the second packet to the second endpoint.

After step 604, the second endpoint receives the second packet, and determines, based on the second indication information in the second packet, that the second link is unavailable, and the second endpoint determines whether a third link is available.

In a possible implementation, if determining that the third link is available, the second endpoint generates a fourth packet and sends the fourth packet to a fourth endpoint. A payload carried by the fourth packet is the same as the payload carried by the second packet. The fourth packet includes sixth indication information, and the sixth indication information indicates that the third link is available. The third link is a link that is between the second endpoint and the fourth endpoint and that is used to carry the fourth packet. The third link belongs to a second routing path between the first endpoint and the destination access device. The fourth endpoint is a next-hop node of the second endpoint on the second routing path.

For determining, by the second endpoint, whether the third link is available, refer to the foregoing implementation in which the first endpoint determines whether the second link is available. Details are not described herein again.

For example, the first endpoint is the gateway 2 in FIG. 3, and the first link is the link 2. When the link 2 is in a faulty state, the gateway 2 cannot send the first packet to the gateway 3 through the link 2, and the gateway 2 may trigger loopback on the fourth port, which may be that the gateway 2 loops back, to a receiving unit of the fourth port, the first packet that needs to be sent by a sending unit of the fourth port. Further, optionally, the gateway 2 may add a loopback marker, which may also be referred to as the second indication information in the foregoing, to the first packet on which loopback is performed. In this embodiment of this application, performing loopback on the fourth port may also be referred to as performing folding switchover on the fourth port. There are a plurality of nouns for that, but the nouns all essentially mean: The gateway 2 rewrites the LLRE field of the first packet. After the rewriting, the gateway 2 processes and forwards, based on a processing procedure for data received from the receiving unit of the fourth port, the first packet whose LLRE field is rewritten (that is, the first packet whose LLRE field is rewritten is considered as the data received from the fourth port for processing and forwarding). For example, the first packet whose LLRE field is rewritten may be referred to as the second packet.

For example, when the link 2 is in the faulty state, the gateway 2 modifies the LLRE field in the first packet to 0xF1C1_1033_0000. That is, the wrapped field changes to 1, which indicates that the packet encounters a link fault and folding switchover occurs; and receive_ineligible changes to 1. That receive_ineligible is 1 when wrapped is 1 indicates that the packet has not returned to a source node after folding switchover. The source endpoint herein is an endpoint that adds the LLRE field to the first packet, which is the gateway 1 in this example. A TTL field is reset to a maximum value, namely, 3. That is, the second packet is obtained.

Step 605: The first endpoint generates a third packet. Then, proceed to perform step 606.

The third packet includes third indication information, and the third indication information indicates that the second link is available.

Step 606: The first endpoint sends the third packet to the third endpoint.

For example, the first endpoint is the gateway 2 in FIG. 3, the second link is the link 2, and the third endpoint is the gateway 3. When the link 2 is in a non-faulty state, the gateway 2 may send the third packet to the gateway 3 through the link 2.

Packets transmitted between endpoints in the foregoing embodiment, for example, the first packet, the second packet, the third packet, and the fourth packet, may include LLRE fields. The LLRE field may include a folding switchover indication field. The folding switchover indication field may carry folding switchover indication information. For example, folding switchover indication information carried in the first packet is the first indication information, folding switchover indication information carried in the second packet is the second indication information, folding switchover indication information carried in the third packet is the third indication information, and folding switchover indication information carried in the fourth packet is the sixth indication information.

In a possible implementation, the LLRE field may further include fourth indication information, and the fourth indication information indicates that a packet does not pass through the source endpoint connected to a source access device; or the LLRE field further includes fifth indication information, and the fifth indication information indicates that a packet has passed through the source endpoint.

In a possible implementation, the LLRE field may further include a packet life cycle, and the packet life cycle indicates a quantity of endpoints that the packet does not pass through on a routing path on which the packet is located, or indicates a quantity of endpoints that the packet has passed through on a routing path on which the packet is located.

In a possible implementation, the LLRE field may further include a ring network packet identifier indicating whether the packet is a ring network packet.

In a possible implementation, the LLRE field may further include a ring network identifier indicating an identifier of a ring network to which the packet belongs.

In this embodiment of this application, the LLRE field may be carried in a packet header when the packet header is added to an original packet after the source endpoint receives the original packet, and the original packet is received by the source endpoint from the source access device. For example, the second endpoint is the source endpoint. Before sending the first packet to the first endpoint, the second endpoint may further receive the original packet from the source access device. Then, the second endpoint generates the first packet, where the first packet is obtained by adding the packet header to the original packet. For example, the packet header includes the LLRE field. In this case, when the original packet of the source access device is transmitted between the endpoints, packet forwarding in the ring network may be controlled by using the LLRE field, so that packet transmission continues on another path when folding switchover occurs, to improve a success rate of packet transmission.

After a packet arrives at a destination endpoint, the destination endpoint removes the LLRE field in the packet to obtain the original packet, and then transmits the original packet to the destination access device. For example, the third endpoint is the destination endpoint. The third endpoint receives the third packet, where the third packet includes packet information and an LLRE field. Then, the third endpoint may further provide the packet information of the third packet to the destination access device, where the packet information does not include the LLRE field of the first packet. The packet information herein may be the original packet. In other words, the destination access device receives the original packet.

In this embodiment of this application, a packet transmitted between the endpoints, for example, the first packet, the second packet, the third packet, or the fourth packet, may be of any one of the following types: a unicast packet, a multicast packet, and a broadcast packet.

The following uses a VXLAN network as an example to describe, with reference to FIG. 3, an example in which the original packet is transmitted from the source access device to a source endpoint in the VXLAN network and the LLRE field is added.

For example, the first endpoint is the gateway 2 in FIG. 3, and the second endpoint is the gateway 1 in FIG. 3. In this example, the gateway 2 may receive the original packet from the source access device through the gateway 1. After receiving the original packet from the source access device, the gateway 1 encapsulates the original packet, and adds an outer VXLAN tunnel header, for example, a conventional VXLAN tunnel header shown in (a) in FIG. 5. In this embodiment of this application, a 6-byte LLRE tunnel header shown in (b) in FIG. 5 is additionally added to the conventional VXLAN tunnel header, and a field included in the LLRE tunnel header is the LLRE field. The LLRE field may include the folding switchover indication (wrapped) field, and optionally, may further include one or more fields such as a ring network identifier (ring_ID) field, an LLRE format (LLRE_format) field, an arrival-at-source-node indication (receive_ineligible) field, and the LLRE life cycle (TTL) field.

As shown in (b) in FIG. 5, the LLRE tunnel header may include a 2-byte Ethernet packet type (ETH_TYPE). For example, 0xF1C1 that is the same as an 802.1CB protocol packet may be ETH_TYPE. In this case, when the gateway 3 generates the first packet carrying the LLRE tunnel header and forwards the first packet to another gateway that does not support an LLRE, the first packet carrying the LLRE tunnel header may also be processed as the 802.1CB packet. In this way, all devices that receive the packet carrying the LLRE tunnel header can parse the packet based on an 802.1CB format, and even if a device to which the packet transmission method provided in this application is not applicable receives the packet carrying the LLRE tunnel header, a problem that the packet cannot be identified does not occur.

The following uses an example in which the source access device is an ECU 1 and the destination access device is an ECU 2 to describe a specific example in which the gateway 1 adds an outer VXLAN tunnel header after receiving a packet A from the ECU 1.

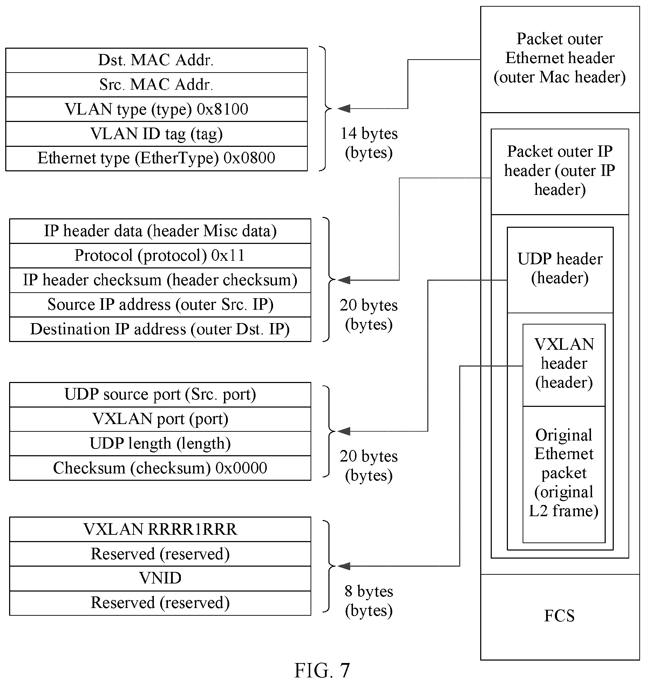

First, the ECU 1 sends the packet A to the gateway 1. It is assumed that a destination (media access control address, MAC) address (DMAC) carried in the packet A is 0xaaaabbbbcccc, a packet length is 128 bytes, and packet content is 0xaaaabbbbcccc_..._a5a5a5a5a5a5. After the packet A arrives at the gateway 1, a layer 2 routing table of the gateway 1 finds that the MAC address 0xaaaabbbbcccc needs to enter a VXLAN tunnel for forwarding. Therefore, a VXLAN tunnel header is added before the packet content 0xaaaabbbbcccc_a5a5a5a5a5a5_...a5 of the packet A, and the added VXLAN tunnel header is 50 bytes. As shown in FIG. 7, the 50-byte VXLAN tunnel header sequentially includes an 8-byte VXLAN packet header (VXLAN Header), an 8-byte UDP packet header (UDP Header), a 20-byte IP header (Outer IP Header), and a 14-byte MAC frame header (Outer MAC Header). For example, if an added DMAC address is 0x1 and an added DIP is 0xaabbcedd, a packet obtained through adding of the VXLAN tunnel header is 0x111122223333 (DMAC)_..._aabbccdd (DIP)_..._aaaabbbbcccc (original packet header)_..._a5a5a5a5, and a total packet length is an original 128 bytes plus the 50-byte VXLAN tunnel header, that is, a 178-byte VXLAN tunnel header.

Then, a 6-byte LLRE field is added to the VXLAN tunnel header to obtain a packet B, and a total length of the packet B is 184 bytes. For example, content of the 6-byte LLRE field is 0xF1C1_1003 _0000, where ring_ID is 0; an LLRE_format field is 1, which indicates that this is a ring network packet; wrapped is 0, which indicates that the packet A does not encounter a link fault and no folding switchover occurs; receive_ineligible is 0, which has no special meaning in a case of no folding switchover; and a TTL field is a total quantity of gateways on the ring network minus 1, that is, 4 minus 1, which is 3.

In this case, two routing paths from the gateway 1 to the gateway 3 may be configured inside the VXLAN network:
A 1^{st} routing path is: the first port of the gateway 1, the third port of the gateway 2, the fourth port of the gateway 2, and the fifth port of the gateway 3.
A 2^{nd} routing path is: the second port of the gateway 1, the eighth port of the gateway 4, the seventh port of the gateway 4, and the sixth port of the gateway 3.

In a possible implementation, one of the two routing paths may be configured as a preferential routing path. For example, the 1^{st} routing path is configured as the preferential routing path. In a case of no link fault, a packet sent by the source access device to the VXLAN network preferentially arrives at the gateway 3 through the 1^{st} routing path.

After adding the outer VXLAN tunnel header to the original packet (namely, the packet A), the gateway 1 sends, to the gateway 2, the packet B obtained through adding of the outer VXLAN tunnel header. After receiving the packet B, the gateway 2 modifies the TTL field to 2, to obtain a packet C, and then continues to send the packet C to the gateway 3. The gateway 3 removes the VXLAN tunnel header in the packet C, to obtain the original packet, namely, the packet A. Then, the gateway 3 sends, to the destination access device, the packet A obtained through removal of the VXLAN tunnel header.

The following describes an implementation of the packet transmission method with reference to a specific example.

For example, the first endpoint may be the gateway 2 in FIG. 3, the second endpoint may be the gateway 1 in FIG. 3, and the third endpoint is the gateway 3. The gateway 1 is the source endpoint connected to the source access device. That is, when the link 2 between the gateway 2 and the gateway 3 is in the faulty state, the gateway 2 triggers folding switchover of the first packet to generate the second packet, then sends the second packet to the gateway 1 through the link 8, and then transmits the original packet in the second packet to the gateway 3 through the gateway 1 and the gateway 4.

After the second packet arrives at the gateway 1 from the gateway 2, because the gateway 1 is the source endpoint, the gateway 1 modifies the LLRE field in the second packet to 0xF1C1_1012_0000, where other fields are unchanged, and a receive_ineligible field is changed to 0. That is, the packet has passed through the source node after folding switchover. Then, a TTL field is decreased by 1 after being forwarded by a gateway, that is, is decreased from 3 to 2, to obtain the fourth packet.

Finally, the gateway 1 transmits the fourth packet to the gateway 4 through the link 5. The gateway 4 modifies TTL in the fourth packet to 1, and other fields are unchanged, that is, an LLRE field in this case is 0xF1C1_1011_0000, to obtain a fifth packet. Then, the gateway 4 forwards the fifth packet to the gateway 3 through a link 6. Then, the gateway 3 removes a VXLAN tunnel header and the LLRE field in the fifth packet, and forwards, to the destination access device, the original packet that serves as a payload (payload).

In the foregoing example, when the link 2 is faulty, a transmission service may continue to be provided in a manner of performing loopback on the first packet. In other words, an in-vehicle ring network is allowed to still provide an available transmission service when a single point of failure occurs, to transfer an original packet of a service to the destination access device, so that data transmission reliability can be improved.

In the foregoing embodiment, an example in which a unicast packet is transmitted in the VXLAN tunnel is used for description. This embodiment of this application is also applicable to a multicast/broadcast packet transmission scenario.

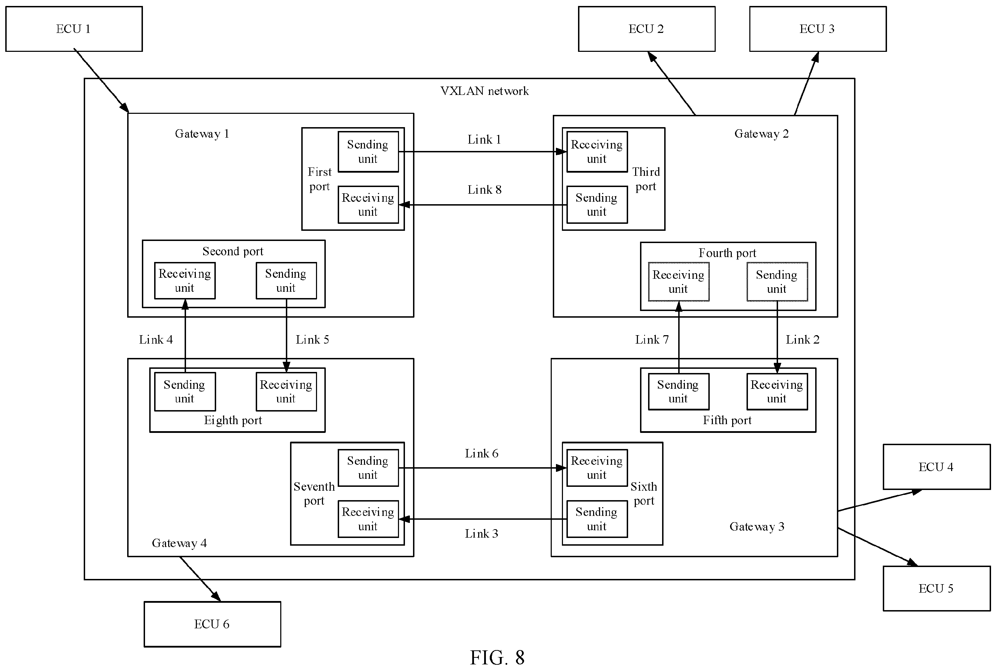

FIG. 8 is an example of a diagram of another network architecture according to an embodiment of this application.

A networking manner of the network architecture shown in FIG. 8 is consistent with that of the network architecture shown in FIG. 3. A difference lies in that a packet sent by a source access device (ECU 1) in FIG. 8 is a multicast packet. The ECU 1 sends a multicast packet to a gateway 1, and the gateway 1 adds a VXLAN tunnel header to the multicast packet. The VXLAN tunnel header includes an LLRE field. When the multicast packet arrives at each gateway in a VXLAN network, the gateway locally searches for whether there is an access device that belongs to a same multicast group as the multicast packet, and forwards the packet to the access device that belongs to the same multicast group.

In an example shown in FIG. 8, in a VXLAN network including the gateway 1 to a gateway 4, an ECU 2, an ECU 3, an ECU 4, an ECU 5, and an ECU 6 are in a same multicast group as the ECU 1. The multicast packet needs to pass through each gateway in the entire VXLAN network. When the multicast packet arrives at each gateway, the gateway forwards the multicast packet to an ECU connected to the gateway.

Inside the VXLAN network, there may be two routing paths for the multicast packet:
Links included in a first routing path are a link 1, a link 2, a link 3, and a link 4.
Links included in a second routing path are a link 5, a link 6, a link 7, and a link 8.

When none of the links is faulty, the multicast packet enters a VXLAN tunnel from the gateway 1, and the LLRE field is added at the gateway 1. For example, a multicast packet obtained through adding of the LLRE field is transmitted based on the first routing path. The multicast packet obtained through adding of the LLRE field passes through paths of the link 1, the link 2, the link 3, and the link 4 and respectively arrives at a gateway 2, a gateway 3, and a gateway 4 in sequence. Then, at each gateway on the first routing path, the packet is forwarded to an ECU that is connected to the gateway and that belongs to the multicast group. TTL of the LLRE field is decreased by 1 each time the packet passes through a gateway. After the packet arrives at the gateway 4, TTL is decreased to 1. That is, the packet has traversed all the gateways in a ring network, and the packet has completed multicast and does not continue to be forwarded.

When a link on the first routing path is unavailable, for example, links between the gateway 3 and the gateway 4 are unavailable, that is, neither the link 3 nor the link 6 can normally forward the packet, a transmission process of the multicast packet from the ECU 1 is as follows:
(1) The gateway 1 sends the multicast packet to the gateway 2 through the link 1, and the gateway 2 completes multicast to the ECU 2 and the ECU 3.
(2) The gateway 2 sends the multicast packet to the gateway 3 through the link 2, and the gateway 3 completes multicast to the ECU 4 and the ECU 5. An LLRE field of the packet in this case is 0xF1C1_1002_0000.
(3) Because the link 3 is in a faulty state, the multicast packet is returned from the gateway 3 to the gateway 2 through the link 7. An LLRE field in this case is 0xF1C1_1033_0000.
   In this case, because the multicast packet has arrived at the gateway 2 before, the gateway 2 determines, based on that wrapped is 1 and receive_ineligible is 1 in the LLRE field of the packet, that the multicast packet has been multicast at the gateway 2, and therefore, does not perform multicast to the ECU 2 and the ECU 3.
(4) The gateway 2 sends the multicast packet to the gateway 1 through the link 8. An LLRE field in the multicast packet in this case is 0xF1C1_1032_0000.
(5) The gateway 1 sends the multicast packet to the gateway 4 through the link 5. Because the gateway 1 is a source endpoint connected to the source access device, when the multicast packet arrives at the gateway 4, an LLRE field is 0xF1C1_1011_0000, and receive_ineligible is changed to 0. When determining that receive_ineligible is 0, the gateway 4 learns that the received multicast packet has passed through the source node. Therefore, multicast needs to be performed at the gateway 4. Therefore, the gateway 4 multicasts the multicast packet to the ECU 6. In this case, TTL in the LLRE field is 1, which indicates that the packet has traversed all the gateways and completes multicast forwarding.

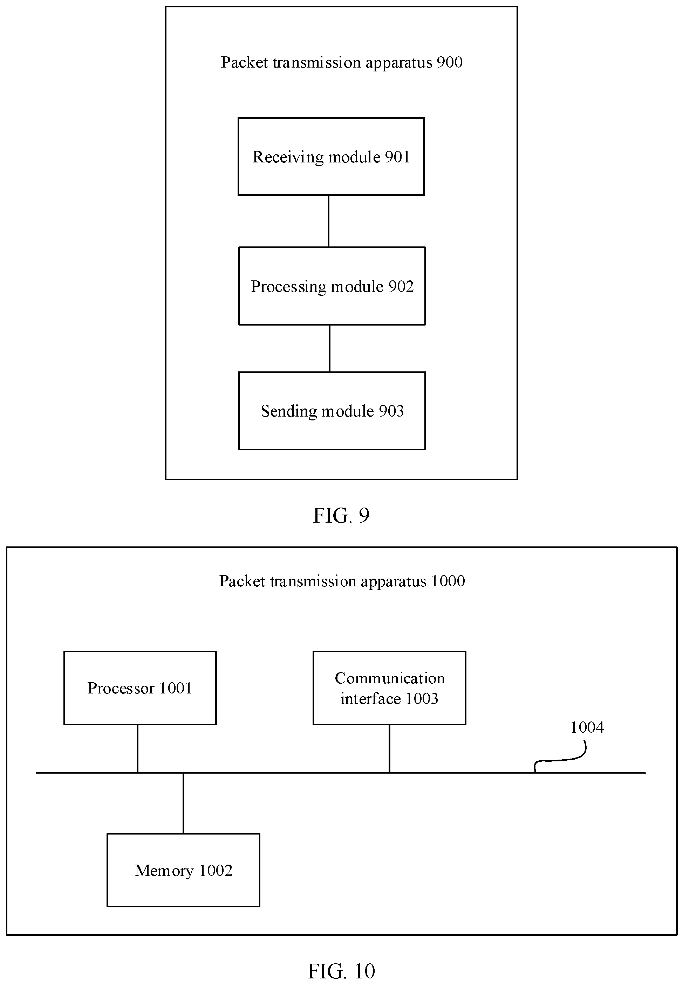

Based on a same inventive concept as the method embodiments, an embodiment of this application further provides a packet transmission apparatus. The packet transmission apparatus is configured to perform the method performed by the first endpoint or the second endpoint in the foregoing method embodiments. As shown in FIG. 9, the packet transmission apparatus 900 includes a receiving module 901, a processing module 902, and a sending module 903. Specifically, in the packet transmission apparatus 900, connections are established between the modules through communication paths.

When the packet transmission apparatus is configured to perform the method performed by the first endpoint in the foregoing method embodiments, the receiving module 901 is configured to obtain a first packet from the second endpoint. The first packet includes first indication information, and the first indication information indicates that a first link is available. The first link is a link that is between the packet transmission apparatus and the second endpoint and that is used to carry the first packet. The first link belongs to a first routing path between the packet transmission apparatus and a destination access device.

The processing module 902 is configured to: if determining that a second link is unavailable, generate a second packet. A payload carried by the second packet is the same as a payload carried by the first packet. The second link is a link between the packet transmission apparatus and a third endpoint on the first routing path. The second packet includes second indication information, and the second indication information indicates that the second link is unavailable. The third endpoint is a next-hop node of the packet transmission apparatus on the first routing path.

The sending module 903 is configured to send the second packet to the second endpoint.

In a possible implementation, the processing module 902 is further configured to: if determining that the second link is available, generate a third packet. The third packet includes third indication information, and the third indication information indicates that the second link is available. The sending module 903 is further configured to send the third packet to the third endpoint.

In a possible implementation, the processing module 902 is specifically configured to: not receive a link detection packet from the third endpoint within preset duration; or receive, by using the receiving module 901, fault information indicating that the second link is faulty.

In a possible implementation, the first indication information is carried in a low-latency reliable Ethernet LLRE field in the first packet, and the second indication information is carried in an LLRE field in the second packet.

In a possible implementation, the LLRE field further includes fourth indication information, and the fourth indication information indicates that a packet does not pass through a source endpoint connected to a source access device; or the LLRE field further includes fifth indication information, and the fifth indication information indicates that a packet has passed through the source endpoint.

In a possible implementation, the LLRE field further includes a packet life cycle, and the packet life cycle indicates a quantity of endpoints that the packet does not pass through on a routing path on which the packet is located, or indicates a quantity of endpoints that the packet has passed through on a routing path on which the packet is located.

In a possible implementation, the LLRE field further includes a ring network packet identifier indicating whether the packet is a ring network packet.

In a possible implementation, the LLRE field further includes a ring network identifier indicating an identifier of a ring network to which the packet belongs.

In a possible implementation, a length of the LLRE field is 6 bytes.

In a possible implementation, the second endpoint is the source endpoint. A receiving module 901 of the source endpoint is configured to receive an original packet from the source access device, and a sending module 903 is configured to send the first packet to the packet transmission apparatus, where the first packet is obtained by adding a packet header to the original packet.

In a possible implementation, the third endpoint is a destination endpoint. A receiving module 901 of the destination endpoint is further configured to receive the third packet, where the third packet includes packet information and an LLRE field. A processing module 902 is further configured to provide the packet information for the destination access device, where the packet information does not include the LLRE field of the third packet.

In a possible implementation, either of the first packet and the second packet is of any one of the following types: a unicast packet, a multicast packet, and a broadcast packet.

In a possible implementation, a frame format of either of the first packet and the second packet conforms to an 802.1CB format.

When the packet transmission apparatus is configured to perform the method performed by the second endpoint in the foregoing method embodiments, the sending module 903 is configured to send a first packet to the first endpoint. The first packet includes first indication information, and the first indication information indicates that a first link is available. The first link is a link that is between the first endpoint and the packet transmission apparatus and that is used to carry the first packet. The first link belongs to a first routing path between the first endpoint and a destination access device.

The receiving module 901 is configured to receive a second packet from the first endpoint. The second packet includes second indication information, and the second indication information indicates that a second link is unavailable. The second link is a link between the first endpoint and a next-hop third endpoint on the first routing path. A payload carried by the second packet is the same as a payload carried by the first packet.

In a possible implementation, the processing module 902 is configured to: if determining that a third link is available, generate a fourth packet. A payload carried by the fourth packet is the same as the payload carried by the second packet. The fourth packet includes sixth indication information, and the sixth indication information indicates that the third link is available. The third link is a link that is between the packet transmission apparatus and a fourth endpoint and that is used to carry the fourth packet. The third link belongs to a second routing path between the first endpoint and the destination access device. The fourth endpoint is a next-hop node of the packet transmission apparatus on the second routing path.

The sending module 903 is further configured to send the fourth packet to the fourth endpoint.

In a possible implementation, the processing module 902 is specifically configured to: receive a link detection packet from the fourth endpoint within preset duration; or determine that the receiving module 901 does not receive fault information indicating that the third link is faulty.

In a possible implementation, the first indication information is carried in a low-latency reliable Ethernet LLRE field in the first packet, the second indication information is carried in an LLRE field in the second packet, and the sixth indication information is carried in an LLRE field in the fourth packet.

In a possible implementation, the LLRE field further includes fourth indication information, and the fourth indication information indicates that a packet does not pass through a source endpoint connected to a source access device; or the LLRE field further includes fifth indication information, and the fifth indication information indicates that a packet has passed through the source endpoint.

In a possible implementation, the LLRE field further includes a packet life cycle, and the packet life cycle indicates a quantity of endpoints that the packet does not pass through on a routing path on which the packet is located, or indicates a quantity of endpoints that the packet has passed through on a routing path on which the packet is located.

In a possible implementation, the LLRE field further includes a ring network packet identifier indicating whether the packet is a ring network packet.

In a possible implementation, the LLRE field further includes a ring network identifier indicating an identifier of a ring network to which the packet belongs.

In a possible implementation, a length of the LLRE field is 6 bytes.

In a possible implementation, the packet transmission apparatus is the source endpoint. The receiving module 901 is further configured to receive an original packet from the source access device, and the processing module 902 is further configured to generate the first packet, where the first packet is obtained by adding a packet header to the original packet.

In a possible design, the third endpoint is a destination endpoint. A receiving module 901 of the destination endpoint is further configured to receive a third packet, and a processing module 902 is further configured to provide packet information for the destination access device, where the packet information does not include an LLRE field of the third packet.

In a possible implementation, any one of the first packet, the second packet, or the fourth packet is of any one of the following types: a unicast packet, a multicast packet, and a broadcast packet.

In a possible implementation, a frame format of any one of the first packet, the second packet, or the fourth packet conforms to an 802.1CB format.

FIG. 10 is a diagram of a packet transmission apparatus according to this application. The packet transmission apparatus may be the packet transmission apparatus 900 in the foregoing embodiment. The packet transmission apparatus 1000 includes a processor 1001 and a communication interface 1003. Optionally, the packet transmission apparatus 1000 may further include a memory 1002 and/or a communication line 1004. The communication interface 1003, the processor 1001, and the memory 1002 may be connected to each other through the communication line 1004. The communication line 1004 may be a peripheral component interconnect (peripheral component interconnect, PCI for short) bus, an extended industry standard architecture (extended industry standard architecture, EISA for short) bus, or the like. The communication line 1004 may be classified into an address bus, a data bus, a control bus, and the like. For ease of representation, only one thick line is for representing the bus in FIG. 10, but this does not mean that there is only one bus or only one type of bus.

The processor 1001 may be a CPU, a microprocessor, an ASIC, or one or more integrated circuits configured to control program execution in the solutions of this application.

The communication interface 1003 is configured to communicate, by using any apparatus such as a transceiver, with another device or a communication network, for example, the Ethernet, a radio access network (radio access network, RAN), a wireless local area network (wireless local area network, WLAN), or a wired access network.

The memory 1002 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium that can be configured to carry or store expected program code in a form of instruction or data structure and that can be accessed by a computer, but is not limited thereto. The memory may exist independently, and is connected to the processor through the communication line 1004. The memory may alternatively be integrated with the processor.

The memory 1002 is configured to store computer-executable instructions for executing the solutions of this application, and the processor 1001 controls execution. The processor 1001 is configured to execute the computer-executable instructions stored in the memory 1002, to implement the methods provided in the foregoing embodiments of this application.

An embodiment of this application further provides a vehicle. The vehicle includes the packet transmission apparatus in the foregoing embodiment. In a possible implementation, the vehicle includes an apparatus configured to perform the method performed by the first endpoint in the foregoing embodiments, and includes an apparatus configured to perform the method performed by the second endpoint in the foregoing embodiments.

An embodiment of this application further provides a computer storage medium. The computer storage medium stores computer instructions. When the computer instructions are run on a computer, the computer is enabled to perform the foregoing related method steps, to implement the method performed by the first endpoint or the method performed by the second endpoint in the foregoing embodiments.

An embodiment of this application further provides a computer program product. When the computer program product runs on a computer, the computer is enabled to perform the foregoing related steps, to implement the method performed by the first endpoint or the method performed by the second endpoint in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the method performed by the first endpoint or the method performed by the second endpoint in the foregoing method embodiments.

The storage device, the computer storage medium, the computer program product, or the chip provided in embodiments of this application may be configured to perform the method corresponding to the first endpoint or the method performed by the second endpoint provided above. Therefore, for beneficial effects that can be achieved by the storage device, the computer storage medium, the computer program product, or the chip, refer to the beneficial effects of the corresponding method provided above. Details are not described herein again.

Based on the descriptions of the foregoing implementations, a person skilled in the art may understand that, for a purpose of convenient and brief description, division into the foregoing functional modules is used as an example for illustration. In actual application, the foregoing functions may be allocated to different functional modules for implementation according to a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed in different places. Some or all of the units may be selected according to actual requirements to achieve the objectives of the solutions of embodiments.

In addition, the functional units (or modules) in embodiments of this application may be integrated into one processing unit, each unit may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

Optionally, the computer-executable instructions in embodiments of this application may also be referred to as application program code. This is not specifically limited in embodiments of this application.

All or some of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The various illustrative logical units and circuits described in embodiments of this application may implement or operate the functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by the processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to the processor, so that the processor may read information from the storage medium and write information to the storage medium. Optionally, the storage medium may be integrated into the processor. The processor and the storage media may be disposed in the ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, this specification and the accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A packet transmission method, wherein the method comprises:
obtaining, by a first endpoint, a first packet from a second endpoint, wherein the first packet comprises first indication information, the first indication information indicates that a first link is available, the first link is a link that is between the first endpoint and the second endpoint and that is used to carry the first packet, and the first link belongs to a first routing path between the first endpoint and a destination access device;
if determining that a second link is unavailable, generating, by the first endpoint, a second packet, wherein a payload carried by the second packet is the same as a payload carried by the first packet, the second link is a link between the first endpoint and a third endpoint on the first routing path, the second packet comprises second indication information, the second indication information indicates that the second link is unavailable, and the third endpoint is a next-hop node of the first endpoint on the first routing path; and
sending, by the first endpoint, the second packet to the second endpoint.

2. The method according to claim 1, wherein the method further comprises:
if determining that the second link is available, generating, by the first endpoint, a third packet, wherein the third packet comprises third indication information, and the third indication information indicates that the second link is available; and
sending, by the first endpoint, the third packet to the third endpoint.

3. The method according to claim 1 or 2, wherein that the first endpoint determines that the second link is unavailable comprises:
the first endpoint does not receive a link detection packet from the third endpoint within preset duration; or
the first endpoint receives fault information indicating that the second link is faulty.

4. The method according to any one of claims 1 to 3, wherein the first indication information is carried in a low-latency reliable Ethernet LLRE field in the first packet, and the second indication information is carried in an LLRE field in the second packet.

5. The method according to claim 4, wherein the LLRE field further comprises fourth indication information, and the fourth indication information indicates that a packet does not pass through a source endpoint connected to a source access device; or the LLRE field further comprises fifth indication information, and the fifth indication information indicates that a packet has passed through the source endpoint.

6. The method according to claim 4 or 5, wherein the LLRE field further comprises a packet life cycle, and the packet life cycle indicates a quantity of endpoints that the packet does not pass through on a routing path on which the packet is located, or indicates a quantity of endpoints that the packet has passed through on a routing path on which the packet is located.

7. The method according to any one of claims 4 to 6, wherein the LLRE field further comprises a ring network packet identifier indicating whether the packet is a ring network packet.

8. The method according to any one of claims 4 to 7, wherein the LLRE field further comprises a ring network identifier indicating an identifier of a ring network to which the packet belongs.

9. The method according to any one of claims 4 to 8, wherein a length of the LLRE field is 6 bytes.

10. The method according to any one of claims 4 to 9, wherein the second endpoint is the source endpoint, and the method further comprises:
receiving, by the source endpoint, an original packet from the source access device; and
sending, by the source endpoint, the first packet to the first endpoint, wherein the first packet is obtained by adding a packet header to the original packet; and
the first routing path is a routing path between the source access device and the destination access device.

11. The method according to any one of claims 4 to 10, wherein the third endpoint is a destination endpoint, and the method further comprises:
receiving, by the destination endpoint, the third packet, wherein the third packet comprises packet information and the LLRE field; and
providing, by the destination endpoint, the packet information for the destination access device, wherein the packet information does not comprise the LLRE field of the third packet.

12. The method according to any one of claims 1 to 11, wherein either of the first packet and the second packet is of any one of the following types:
a unicast packet, a multicast packet, and a broadcast packet.

13. The method according to any one of claims 1 to 12, wherein a frame format of either of the first packet and the second packet conforms to an 802.1CB format.

14. A packet transmission method, wherein the method comprises:
sending, by a second endpoint, a first packet to a first endpoint, wherein the first packet comprises first indication information, the first indication information indicates that a first link is available, the first link is a link that is between the first endpoint and the second endpoint and that is used to carry the first packet, and the first link belongs to a first routing path between the first endpoint and a destination access device; and
receiving, by the second endpoint, a second packet from the first endpoint, wherein the second packet comprises second indication information, the second indication information indicates that a second link is unavailable, the second link is a link between the first endpoint and a next-hop third endpoint on the first routing path, and a payload carried by the second packet is the same as a payload carried by the first packet.

15. The method according to claim 14, wherein the method further comprises:
if determining that a third link is available, generating, by the second endpoint, a fourth packet, wherein a payload carried by the fourth packet is the same as the payload carried by the second packet, the fourth packet comprises sixth indication information, the sixth indication information indicates that the third link is available, the third link is a link that is between the second endpoint and a fourth endpoint and that is used to carry the fourth packet, the third link belongs to a second routing path between the first endpoint and the destination access device, and the fourth endpoint is a next-hop node of the second endpoint on the second routing path; and
sending, by the second endpoint, the fourth packet to the fourth endpoint.

16. The method according to claim 15, wherein that the second endpoint determines that the third link is available comprises:
the second endpoint receives a link detection packet from the fourth endpoint within preset duration; or
the second endpoint does not receive fault information indicating that the third link is faulty.

17. The method according to any one of claims 14 to 16, wherein the first indication information is carried in a low-latency reliable Ethernet LLRE field in the first packet, the second indication information is carried in an LLRE field in the second packet, and the sixth indication information is carried in an LLRE field in the fourth packet.

18. The method according to claim 17, wherein the LLRE field further comprises fourth indication information, and the fourth indication information indicates that a packet does not pass through a source endpoint connected to a source access device; or the LLRE field further comprises fifth indication information, and the fifth indication information indicates that a packet has passed through the source endpoint.

19. The method according to claim 17 or 18, wherein the LLRE field further comprises a packet life cycle, and the packet life cycle indicates a quantity of endpoints that the packet does not pass through on a routing path on which the packet is located, or indicates a quantity of endpoints that the packet has passed through on a routing path on which the packet is located.

20. The method according to any one of claims 17 to 19, wherein the LLRE field further comprises a ring network packet identifier indicating whether the packet is a ring network packet.

21. The method according to any one of claims 17 to 20, wherein the LLRE field further comprises a ring network identifier indicating an identifier of a ring network to which the packet belongs.

22. The method according to any one of claims 17 to 21, wherein a length of the LLRE field is 6 bytes.

23. The method according to any one of claims 17 to 22, wherein the second endpoint is the source endpoint, and before the sending, by a second endpoint, a first packet to a first endpoint, the method further comprises:
receiving, by the second endpoint, an original packet from the source access device; and
generating, by the second endpoint, the first packet, wherein the first packet is obtained by adding a packet header to the original packet.

24. The method according to any one of claims 14 to 23, wherein a frame format of any one of the first packet, the second packet, or the fourth packet conforms to an 802.1CB format.

25. A packet transmission apparatus, comprising:
a receiving module, configured to obtain a first packet from a second endpoint, wherein the first packet comprises first indication information, the first indication information indicates that a first link is available, the first link is a link that is between the packet transmission apparatus and the second endpoint and that is used to carry the first packet, and the first link belongs to a first routing path between the packet transmission apparatus and a destination access device; and
a processing module, configured to: if determining that a second link is unavailable, generate a second packet, wherein a payload carried by the second packet is the same as a payload carried by the first packet, the second link is a link between the packet transmission apparatus and a third endpoint on the first routing path, the second packet comprises second indication information, the second indication information indicates that the second link is unavailable, and the third endpoint is a next-hop node of the packet transmission apparatus on the first routing path; and
a sending module, configured to send the second packet to the second endpoint.

26. A packet transmission apparatus, comprising:
a sending module, configured to send a first packet to a first endpoint, wherein the first packet comprises first indication information, the first indication information indicates that a first link is available, the first link is a link that is between the first endpoint and the packet transmission apparatus and that is used to carry the first packet, and the first link belongs to a first routing path between the first endpoint and a destination access device; and
a receiving module, configured to receive a second packet from the first endpoint, wherein the second packet comprises second indication information, the second indication information indicates that a second link is unavailable, the second link is a link between the first endpoint and a next-hop third endpoint on the first routing path, and a payload carried by the second packet is the same as a payload carried by the first packet.

27. A packet transmission apparatus, comprising a memory and at least one processor, wherein
the memory is configured to store a computer program; and
the processor is configured to execute the computer program stored in the memory, to implement the method according to any one of claims 1 to 13.

28. A packet transmission apparatus, comprising a memory and at least one processor, wherein
the memory is configured to store a computer program; and
the processor is configured to execute the computer program stored in the memory, to implement the method according to any one of claims 14 to 24.

29. A computer-readable storage medium, wherein the computer-readable storage medium stores a computer program, and when the computer program is run on a computing apparatus, the computing apparatus is enabled to perform the method according to any one of claims 1 to 13.

30. A computer-readable storage medium, wherein the computer-readable storage medium stores a computer program, and when the computer program is run on a computing apparatus, the computing apparatus is enabled to perform the method according to any one of claims 14 to 24.
